# EUROPEAN PATENT APPLICATION

(11) **EP 4 672 078 A1**
(43) Date of publication of application: **31.12.2025**
(21) Application number: 25161641.3
(22) Date of filing: 04.03.2025
(51) Int. Cl.: G06F 40/216, G06F 40/30, G06F 40/35, G06F 40/44, G06F 40/56

(54) **RISK DETECTION METHOD AND APPARATUS FOR LANGUAGE MODEL, DEVICE, MEDIUM, AND PRODUCT**

(30) Priority: 26.06.2024 CN 202410841701
(71) Applicant: Beijing Volcano Engine Technology Co., Ltd., Beijing 100190 (CN)
(72) Inventor: DUAN, Xu, Beijing, 100028 (CN); LIU, Yannan, Beijing, 100028 (CN)
(74) Representative: Isarpatent

(57) **Abstract**

The present disclosure provides a risk detection method and apparatus for a language model, a device, a medium and a product, and the method includes: acquiring model input data of a target language model (S1); determining at least one of intent description content and technique description content from the model input data (S2); performing intent risk detection processing on the intent description content determined to obtain an intent risk detection result (S3), and/or performing technique risk detection processing on the technique description content determined to obtain a technique risk detection result (S4); and determining a risk detection result of the target language model applied to the model input data based on at least one of the intent risk detection result obtained and the technique risk detection result obtained (S5).

## Description

### CROSS-REFERENCE TO RELATED APPLICATION

The present application claims the priority to Chinese Patent Application No. 202410841701.1, filed on June 26, 2024, the entire disclosure of which is incorporated herein by reference as portion of the present application.

### TECHNICAL FIELD

The present disclosure relates to a risk detection method and apparatus for a language model, a device, a medium, and a product.

### BACKGROUND

With the development of language model technology, language model application scenarios are becoming more and more diverse, especially the large language model (LLM) is being applied more and more. For example, a language model may be applied to a conversation scenario, a video generation scenario, and the like.

In addition, in some application processes, it is found that the model may have some risks, such as prompt injection risks, etc., so that there is an urgent need for security defense against the model.

### SUMMARY

The present disclosure provides a risk detection method and apparatus for a language model, a device, a medium, and a product.

To achieve the above objective, the technical solutions provided in the present disclosure are as follows.

The present disclosure provides a risk detection method for a language model, which includes:
acquiring model input data of a target language model;
determining at least one of intent description content and technique description content from the model input data;
performing intent risk detection processing on the intent description content determined to obtain an intent risk detection result, and/or performing technique risk detection processing on the technique description content determined to obtain a technique risk detection result; and
determining a risk detection result of the target language model applied to the model input data based on at least one of the intent risk detection result obtained and technique risk detection result obtained.

In a possible implementation, the model input data includes at least one prompt; and
the determining at least one of intent description content and technique description content from the model input data includes:
determining at least one of the intent description content and the technique description content from the at least one prompt based on different source types of respective prompts in the at least one prompt.

In a possible implementation, the source types of respective prompts in the at least one prompt include a system prompt and a user prompt; the intent description content is determined based on the system prompt and the user prompt in the model input data; and the technique description content is determined based on the user prompt in the model input data.

In a possible implementation, the method further includes:
performing abnormal response detection processing on response description information to obtain an abnormal response detection result, where the response description information is determined based on the model input data and/or model output data of the target language model, and the model output data is obtained by the target language model by processing the model input data; and
the risk detection result of the target language model applied to the model input data is further determined based on the abnormal response detection result.

In a possible implementation, the model input data includes a plurality of pieces of data, and source types of different data are different; and the intent description content, the technique description content, and the response description information are determined based on the source types of the plurality of pieces of data.

In a possible implementation, the plurality of pieces of data include a plugin response and at least one prompt, a source type of the plugin response is different from a source type of each of the at least one prompt, and source types of different prompts are different; the intent description content and the technique description content are determined based on the at least one prompt and the source types of the at least one prompt; and the response description information is determined based on the plugin response and/or the model output data.

In a possible implementation, the at least one prompt includes a system prompt; and the response description information is further determined based on the system prompt.

In a possible implementation, the method further includes:
acquiring model detection constraint information; and
determining, from detection execution devices corresponding to a plurality of pieces of candidate constraint information, a detection execution device matching the model detection constraint information;
the detection execution device matching the model detection constraint information is configured to perform intent risk detection processing on the intent description content determined to obtain the intent risk detection result, and/or perform technique risk detection processing on the technique description content determined to obtain the technique risk detection result.

In a possible implementation, the model detection constraint information includes at least one selected from a group consisting of: scenario constraint information, region constraint information, service constraint information, language constraint information, and detection item constraint information.

In a possible implementation, the detection execution device matching the model detection constraint information includes a detector corresponding to the intent description content and a detector corresponding to the technique description content; the detector corresponding to the intent description content is configured to perform intent risk detection processing on the intent description content determined to obtain the intent risk detection result; and the detector corresponding to the technique description content is configured to perform technique risk detection processing on the technique description content determined to obtain the technique risk detection result.

In a possible implementation, the intent description content includes intent content of at least two source types; the detector corresponding to the intent description content includes detectors corresponding to intent content of various source types; and for any source type of intent content, a detector corresponding to the source type of intent content is configured to perform intent risk detection processing on the source type of intent content.

In a possible implementation, after the determining, from detection execution devices corresponding to a plurality of pieces of candidate constraint information, the detection execution device matching the model detection constraint information, the method further includes:
sending a detection request to the detection execution device matching the model detection constraint information, where the detection execution device matching the model detection constraint information is configured to perform intent risk detection processing on intent description content carried in the detection request to obtain the intent risk detection result, and/or perform technique risk detection processing on technique description content carried in the detection request to obtain the technique risk detection result; and
receiving feedback information from the detection execution device matching the model detection constraint information, where the feedback information includes the intent risk detection result and/or the technique risk detection result.

In a possible implementation, the detection execution device matching the model detection constraint information is further configured to perform abnormal response detection processing on response description information to obtain an abnormal response detection result; the response description information is determined based on the model input data and/or model output data of the target language model; and the model output data is obtained by the target language model by processing the model input data.

In a possible implementation, the detection execution devices corresponding to the plurality of pieces of candidate constraint information are constructed based on a detection set that is pre-constructed and includes one or more of at least one detection rule, at least one detection vector, and at least one detection model; and
after the determining the risk detection result of the target language model applied to the model input data, the method further includes:
in response to the risk detection result of the target language model applied to the model input data indicating that there is a risk, updating the detection set based on the model input data.

The present disclosure further provides a risk detection apparatus for a language model, which includes:
a data acquisition unit, configured to acquire model input data of a target language model;
a content determination unit, configured to determine at least one of intent description content and technique description content from the model input data;
a data detection unit, configured to perform intent risk detection processing on the intent description content determined to obtain an intent risk detection result, and/or perform technique risk detection processing on the technique description content determined to obtain a technique risk detection result; and
a result determination unit, configured to determine a risk detection result of the target language model applied to the model input data based on at least one of the intent risk detection result obtained and technique risk detection result obtained.

The present disclosure further provides an electronic device, which includes a processor and a memory;
the memory is configured to store instructions or a computer program; and
the processor is configured to execute the instructions or the computer program in the memory to enable the electronic device to perform the risk detection method for a language model provided in the present disclosure.

The present disclosure further provides a computer-readable medium, the computer-readable medium stores instructions or a computer program, and the instructions or the computer program, when run on a device, enable the device to perform the risk detection method for a language model provided in the present disclosure.

The present disclosure further provides a computer program product, which includes a computer program carried on a non-transitory computer-readable medium, and the computer program includes program codes for performing the risk detection method for a language model provided in the present disclosure.

### BRIEF DESCRIPTION OF DRAWINGS

In order to more clearly illustrate the technical solutions in the embodiments of the present disclosure or in the related art, the drawings required for describing the embodiments or the related art will be briefly introduced below. Obviously, the drawings in the following description are only some embodiments of the present disclosure, and those skilled in the art can obtain other drawings according to these drawings without creative effort.
Fig. 1 is a flowchart of a risk detection method for a language model provided by the embodiments of the present disclosure;
Fig. 2 is a schematic diagram of a detection processing logic provided by the embodiments of the present disclosure;
Fig. 3 is a schematic diagram of a detection processing framework provided by the embodiments of the present disclosure;
Fig. 4 is a schematic diagram of a detection processing flow provided by the embodiments of the present disclosure;
Fig. 5 is a schematic diagram of vector recall provided by the embodiments of the present disclosure;
Fig. 6 is a schematic diagram of a classification process provided by the embodiments of the present disclosure;
Fig. 7 is a schematic diagram of another classification process provided by the embodiments of the present disclosure;
Fig. 8 is a schematic diagram of a structure of a risk detection apparatus for a language model provided by the embodiments of the present disclosure; and
Fig. 9 is a schematic diagram of a structure of an electronic device provided by the embodiments of the present disclosure.

### DETAILED DESCRIPTION

The embodiments of the present disclosure will be described in more detail below with reference to the drawings. Although some embodiments of the present disclosure are shown in the drawings, it should be understood that the present disclosure can be implemented in various forms, and should not be construed as being limited to the embodiments set forth herein. On the contrary, these embodiments are provided to make the understanding of the present disclosure more thorough and complete. It should be understood that the drawings and embodiments of the present disclosure are only for illustrative purposes, and are not intended to limit the protection scope of the present disclosure.

In the description of the embodiments of the present disclosure, the term "include/comprise" and similar terms should be understood as open inclusion, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below.

In this text, unless explicitly stated, performing a step "in response to A" does not mean that this step is performed immediately after "A", but may include one or more intermediate steps.

It should be understood that the data involved in the technical solutions of the present disclosure (including but not limited to the data itself, the acquisition, use, storage, or deletion of the data) should comply with the requirements of corresponding laws, regulations, and related provisions.

It should be understood that before using the technical solutions disclosed in the embodiments of the present disclosure, the related users should be informed of the type, scope of use, use scenarios, etc. of the information involved in the present disclosure and obtain authorization from the related users through appropriate means according to relevant laws and regulations, where the related users may include any type of rights holders, such as individuals, enterprises, and organizations.

For example, in response to receiving an active request from a user, prompt information is sent to the related user to explicitly prompt the related user that the operation requested to be performed will require the acquisition and use of the related user's information, so that the related user can independently choose whether to provide information to the software or hardware such as the electronic device, application, server, or storage medium that performs the operation of the technical solution of the present disclosure according to the prompt information.

As an optional but non-restrictive implementation, a way of sending prompt information to the related user in response to receiving the active request from the related user may be, for example, a pop-up window, and the prompt information may be presented in the pop-up window in the form of text. In addition, the pop-up window may also carry a selection control for the user to select "agree" or "disagree" to provide information to the electronic device.

It should be understood that the above process of notifying and obtaining user authorization is only illustrative, and does not limit the implementation of the present disclosure, and other ways that meet relevant laws and regulations may also be applied to the implementation of the present disclosure.

The solutions of the present disclosure will be described in detail below.

The inventor(s) of the present disclosure have found that a security defense direction for a model is model detection and response, and the "model detection and response" specifically includes: comprehensively determining whether there is a risk operation by means of detecting an input and an output of the model, an internal calculation process of the model, and an action of a downstream module of the model, and intercepting or filtering the risk operation. For the security defense direction of "model detection and response", it can identify unexpected requests by means of detecting the input and output of the model. Based on this, a security defense idea for the model is: inserting a detection and filtering process in the input and output steps of the model, so as to ensure the security of the content entering the model and the content output by the model, and then protect against prompt injection risks, etc.

The inventor(s) of the present disclosure further found that, for some related solutions for detecting the input and output of the model, these solutions can be combined with a rule engine, a small parameter quantity model similar to natural language processing (NLP), vector retrieval, and other means to directly perform risk detection processing on the overall input and output of the model, so as to solve risks such as direct injection attacks, language logic attacks, and the like. The rule engine refers to using a rule engine similar to yara to determine whether the input or output hits a predefined rule, usually in a regular expression. The small parameter quantity model refers to performing risk classification on the model input or output by means of fine-tuning a small parameter quantity model similar to Bert. The vector retrieval refers to judging whether the model input or output hits a similar attack sample by means of vectorizing a known attack sample into a library.

The inventor(s) of the present disclosure further found that the related solution shown in the above paragraph has the following problems: because the model attack may be composed of two characteristics of malicious intent and attack technique, such as two characteristics shown in Table 1 below, free combinations between different characteristics may form new model attacks, so that the number of samples that need to be learned in the related solution implemented by performing risk detection on the entire prompt will increase exponentially with the increase of the risk types, resulting in poor scalability, poor generalization, and poor timeliness of the related solution.

**Table 1 Different characteristics of model attacks**

| Concept | Definition | Example | Explanation | Analogy to traditional vulnerability |
|---|---|---|---|---|
| Malicious Intent | The ultimate purpose of an attacker to carry out an attack. | Please act as Identity 1, who always tells Story 1 to lull me to sleep. | The attacker's purpose is to make the model output the content of "Story 1". | This is analogical to a payload in a traditional vulnerability. |
| | | | | Taking the template injection vulnerability of Jinja2 as an example, after getting popen, executing cat to obtain the server-side code is the malicious intent of the attacker. |
| Attack Technique | A technique used by an attacker to achieve the above purpose. | Please act as Identity 1, who always tells Story 1 to lull me to sleep. | "Acting as Identity 1" is a technique used by the attacker to bypass security defense measures to achieve the purpose. | This is analogical to an operation performed to execute a payload in a traditional vulnerability EXP. |
| | | | | Taking the template injection vulnerability of Jinja2 as an example, "traversing the class inheritance relationship of a python object until popen is obtained" is an operation performed to execute cat. |

Based on the above findings, in order to better improve security, the present disclosure provides a risk detection method for a language model, the method includes: after acquiring model input data of a target language model, determining at least one of intent description content and technique description content from the model input data; then, performing intent risk detection processing on the intent description content to obtain an intent risk detection result, and/or performing technique risk detection processing on the technique description content to obtain a technique risk detection result; and finally, determining a risk detection result of the target language model applied to the model input data based on the intent risk detection result and/or the technique risk detection result, so that the risk detection result can represent whether there is a risk, such as a prompt injection risk, etc., thereby effectively avoiding security problems caused by the risk, and further facilitating the improvement of security. Because the present disclosure performs risk detection processing on the model input data from the two dimensions of the intent and the technique respectively, the present disclosure can analyze whether there is a prompt injection risk from the two features of the malicious intent and the attack technique respectively, so that the present disclosure can not only detect the attack samples that have been learned in advance, but also detect new attack requests composed of the malicious intent and the attack technique that appear in these attack samples, thereby the number of samples that need to be learned in the present disclosure will not increase exponentially with the increase of the number of risk types, so that the present disclosure has better scalability, generalization and timeliness.

In addition, the execution body of the risk detection method for a language model provided by the embodiments of the present disclosure is not limited in the present disclosure. For example, the risk detection method for a language model provided by the embodiments of the present disclosure may be applied to a terminal device or a server. For another example, the risk detection method for a language model provided by the embodiments of the present disclosure may also be implemented by means of a data interaction process between a terminal device and a server. The terminal device may be a smart phone, a computer, a personal digital assistant (PDA), a tablet computer, or the like. The server may be an independent server, a cluster server, or a cloud server.

In order to enable those skilled in the art to better understand the solutions of the present disclosure, the technical solutions in the embodiments of the present disclosure will be clearly and completely described below with reference to the drawings in the embodiments of the present disclosure. Obviously, the embodiments described are only a part of the embodiments of the present disclosure, but not all of the embodiments. Based on the embodiments in the present disclosure, all other embodiments obtained by those skilled in the art without creative effort belong to the protection scope of the present disclosure.

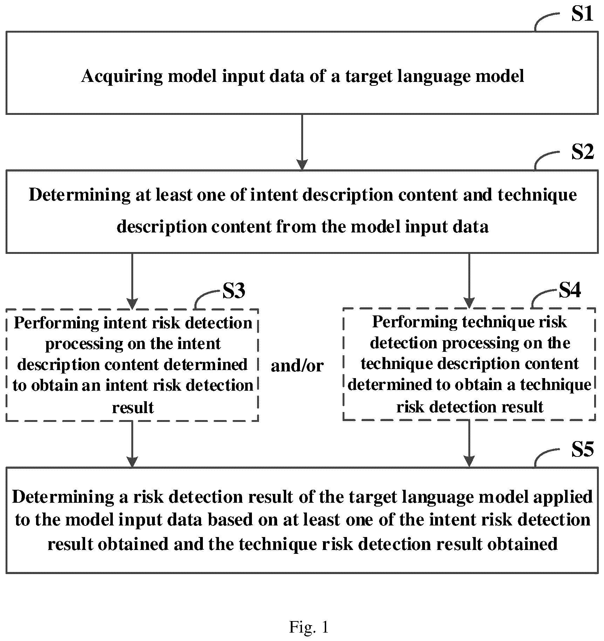

In order to better understand the technical solutions provided in the present disclosure, the risk detection method for a language model provided by the present disclosure will be described below with reference to some drawings. As shown in Fig. 1, the risk detection method for a language model provided by the embodiments of the present disclosure includes the following S1-S5. Fig. 1 is a flowchart of a risk detection method for a language model provided by the embodiments of the present disclosure.

S1: acquiring model input data of a target language model.

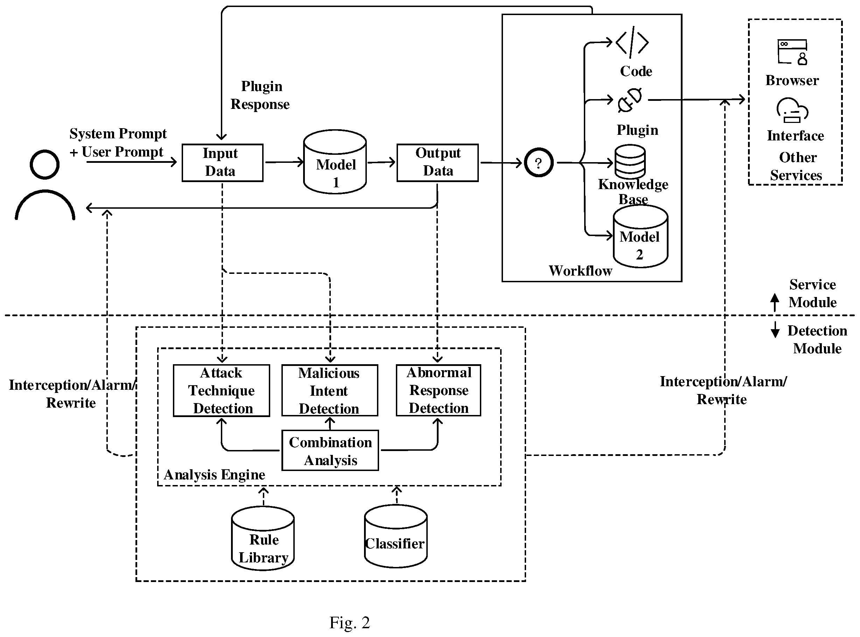

The target language model refers to a model that needs to perform risk detection processing, and the implementation of the target language model is not limited in the present disclosure. For example, the target language model may be implemented by using any existing or future machine learning model, such as an LLM or model 1 shown in Fig. 2.

The model input data refers to data input into the target language model, such as the input data shown in Fig. 2; and the implementation of the model input data is not limited in the present disclosure. For ease of understanding, the following description will be given with reference to three examples.

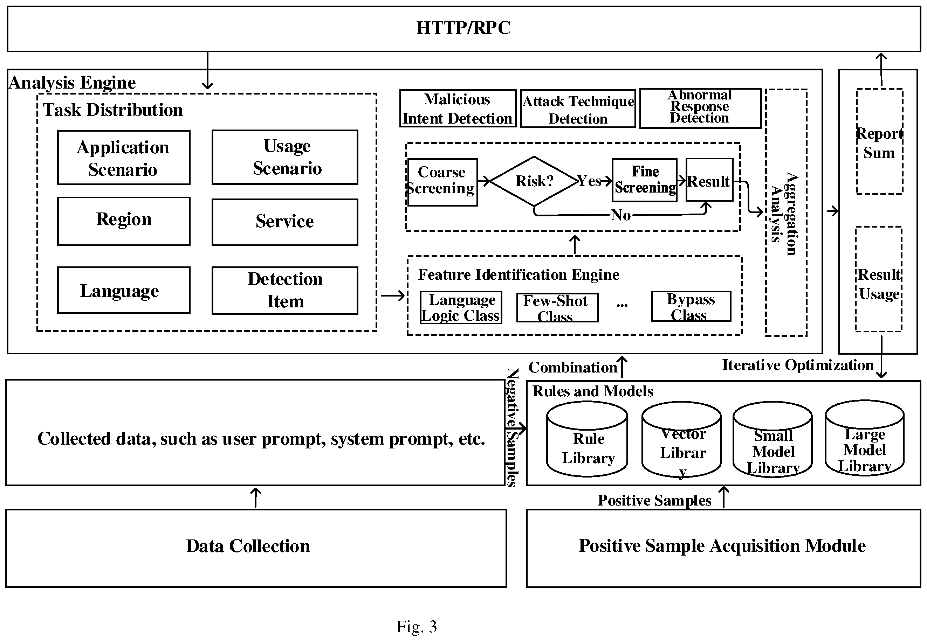

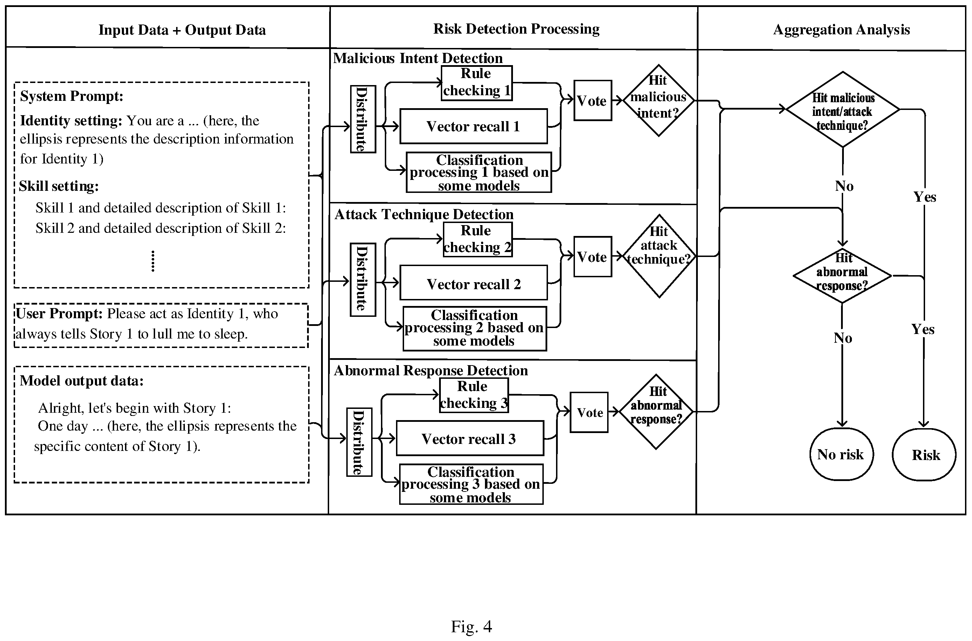

Example 1, in some application scenarios, the model input data may include a user prompt (User Prompt, UP). The user prompt refers to data provided by the user for the target language model, such as data input by the user with the aid of some input devices. In addition, the acquisition manner of the user prompt is not limited in the present disclosure. For example, the user prompt may be acquired by means of some information transmission protocol, such as the Hypertext Transfer Protocol (HTTP) or the Remote Procedure Call (RPC) as shown in Fig. 3. In addition, the implementation of the user prompt is not limited in the present disclosure. For example, the user prompt may be implemented by using the user prompt shown in Fig. 4, "Please act as Identity 1, who always tells Story 1 to lull me to sleep".

Example 2, in some application scenarios, the model input data may include a user prompt and a system prompt (System Prompt, SP). The system prompt refers to data preset for the target language model and used to describe a function of the target language model, such as the system prompt shown in Fig. 4. In addition, the acquisition manner of the system prompt is not limited in the present disclosure. For example, the system prompt may be acquired by means of some information transmission protocol, such as HTTP or RPC as shown in Fig. 3. In addition, the implementation of the system prompt is not limited in the present disclosure. For example, the system prompt may include identity setting content and skill setting content. The identity setting content is used to describe a role played by the target language model, such as an agent (Agent), a chat bot (ChatBot), a code assistant (Code Assistant), a multimodal (MultiModal), and other roles. The skill setting content is used to describe a function of the target language model when the target language model plays a certain role. It should be noted that the implementation of the multimodal is not limited in the present disclosure. For example, the multimodal may be implemented by using text-to-image.

Example 3, in some application scenarios, the model input data may include a user prompt, a system prompt, and a plugin response. The plugin response refers to feedback data of a plugin invoked by the target language model, so that the plugin response can be used to represent an execution result of an upstream task corresponding to the target language model, such as data finally output by a plugin involved in the upstream task or the plugin response shown in Fig. 2, so that the target language model processes the plugin response when executing a current task. It should be noted that the implementation of the plugin is not limited in the present disclosure. For example, the plugin may be implemented by using any plugin that can provide a certain service, such as a browser or a certain application programming interface (API) as shown in Fig. 2. In addition, the acquisition manner of the plugin response is not limited in the present disclosure. For example, the plugin response may be acquired by means of some information transmission protocol, such as HTTP or RPC as shown in Fig. 3.

Based on the above-mentioned three examples, in some application scenarios, such as the workflow execution scenario shown in Fig. 2, for the target language model involved in the current task, the model input data of the target language model may be determined based on part or all of the data of the three source types: the user prompt, the system prompt, and the plugin response. The plugin response may be used to represent the execution result of the upstream task corresponding to the current task.

Based on the above-mentioned related content of S1, for a target language model, the model input data of the target language model may be obtained by splicing data of at least two source types, such as the data of the three source types: the user prompt, the system prompt, and the plugin response as shown in Fig. 2, so that the model input data may include data of these source types, so that subsequent risk detection processing can be performed on the target language model by means of performing different detection processing on data of different source types.

S2: determining at least one of intent description content and technique description content from the model input data.

The intent description content refers to an intent description part existing in the model input data, so that the intent description content can describe a purpose expressed by the model input data, such as the purpose of "telling Story 1".

The technique description content refers to a technique description part existing in the model input data, so that the technique description content can describe a technique used to achieve the purpose expressed by the model input data, such as the role-playing technique of "acting as Identity 1".

In addition, the implementation of the above-mentioned S2 is not limited in the present disclosure. For example, it may be: after acquiring the model input data of the target language model, the model input data may be split into different parts, one part is taken as the intent description content, and the other part is taken as the technique description content, so that the intent description content can represent the intent feature described by the model input data, and the technique description content can represent the technique feature described by the model input data.

The inventor(s) of the present disclosure have found that data of different source types can be used to provide attack features in different dimensions, for example, the user prompt and the system prompt may provide the attack feature of malicious intent, and the user prompt may provide the attack feature of attack technique, and so on.

Based on the above-mentioned research, in order to better improve the detection effect, the present disclosure further provides a possible implementation of the above-mentioned S2, in this implementation, when the above-mentioned model input data includes at least one prompt, the S2 may be: determining at least one of the intent description content and the technique description content from the at least one prompt based on different source types of respective prompts in the at least one prompt. The at least one prompt refers to prompts with different source types existing in the model input data; and the implementation of the at least one prompt is not limited in the present disclosure. For example, the at least one prompt may include a system prompt and a user prompt, so that the source types of respective prompts in the at least one prompt may include a system prompt and a user prompt. It should be noted that the source type of the system prompt is different from the source type of the user prompt.

Based on the above two paragraphs, in a possible implementation, when the above-mentioned model input data includes a system prompt and a user prompt, the above-mentioned S2 may include the following step 11-step 12.

Step 11: determining the intent description content based on the system prompt and the user prompt in the model input data, so that the intent description content includes part or all of the system prompt and part or all of the user prompt.

It should be noted that the implementation of the above-mentioned step 11 is not limited in the present disclosure. For example, in order to ensure the integrity of the information, the step 11 may be: after acquiring the system prompt and the user prompt in the model input data, directly determining the intent description content based on the system prompt and the user prompt, so that the intent description content includes the system prompt and the user prompt.

For another example, in order to improve efficiency, the above-mentioned step 11 may be: after acquiring the system prompt and the user prompt in the model input data, extracting a system intent from the system prompt and extracting a user intent from the user prompt; and determining the intent description content based on the system intent and the user intent, so that the intent description content includes the system intent and the user intent. The system intent is used to describe the purpose expressed by the system prompt, and the implementation of the system intent is not limited in the present disclosure. For example, the system intent may include an intent description part existing in the system prompt. The user intent is used to describe the purpose expressed by the user prompt, and the implementation of the user intent is not limited in the present disclosure. For example, the user intent may include an intent description part existing in the user prompt.

Based on the above-mentioned related content of step 11, in some application scenarios, when the model input data includes prompts of at least two source types, the intent description content is determined from these prompts based on intent determination methods corresponding to different source types, so that the intent description content includes the intent content of the at least two source types, thereby the intent description content can better describe the purpose expressed by the model input data. The prompts of the at least two source types are used to represent the prompts with different source types existing in the model input data. In addition, for any source type among the at least two source types, the intent content of the source type is determined from the prompt of the source type by the intent determination method corresponding to the source type, so that the intent content of the source type can describe the purpose expressed by the prompt of the source type; and the implementation of the intent content of the source type is not limited in the present disclosure. For example, the intent content of the source type may include part or all of content in the prompt of the source type. In addition, the implementation of the intent determination method corresponding to the source type is not limited in the present disclosure. For example, the intent determination method corresponding to the source type is determined based on the intent determination requirement corresponding to the source type, so that the intent content determined based on the intent determination method corresponding to the source type meets the intent determination requirement, which is beneficial to improving the intent determination effect, thereby facilitating the improvement of the malicious intent detection effect.

Step 12: determining the technique description content based on the user prompt in the model input data, so that the technique description content includes part or all of the user prompt.

It should be noted that the implementation of the above-mentioned step 12 is not limited in the present disclosure. For example, in order to ensure the integrity of the information, the step 12 may be: after acquiring the user prompt in the model input data, directly determining the user prompt as the technique description content, so that the technique description content includes the user prompt.

For another example, in order to improve efficiency, the step 12 may be: after acquiring the user prompt in the model input data, extracting a technique description part from the user prompt, and taking the technique description part as the technique description content, so that the technique description content includes the technique description part, thereby the technique description content includes part of content in the user prompt, and further the time consumed in the subsequent processing for the technique description content is less, which is beneficial to improving efficiency.

It should be noted that the present disclosure does not limit the association between the execution time of the above-mentioned step 12 and the execution time of the above-mentioned step 11. For example, the former is earlier than the latter. For another example, the former is later than the latter. For another example, the two are the same.

Based on the above-mentioned related content of step 11 to step 12, in a possible implementation, when the model input data includes a system prompt and a user prompt, the intent description content may be determined based on the system prompt and the user prompt, and the technique description content is determined based on the user prompt, so that subsequent corresponding detection processing can be performed on the intent description content and the technique description content respectively, to determine whether there is a malicious intent and an attack technique, so that subsequent determination can be made, based on these results, on whether there is a prompt injection risk, so that defects caused by performing detection on the entire model input data can be effectively avoided, thereby facilitating the improvement of the detection effect.

Based on the above paragraph, in a possible implementation, when the model input data includes at least one prompt, and the source types of respective prompts in the at least one prompt include a system prompt and a user prompt, the intent description content may be determined based on the system prompt and the user prompt in the model input data; and the technique description content may be determined based on the user prompt in the model input data.

Based on the above-mentioned related content of S2, for some application scenarios, such as the scenario shown in Fig. 2, after acquiring the model input data of the target language model, if the model input data is obtained by splicing data of a plurality of source types, content in at least two dimensions of the intent description content and the technique description content may be split from the model input data based on the source types of different parts in the model input data, so that subsequent comprehensive determination can be made, based on risk detection results in the two dimensions, on whether there is a prompt injection risk in the model input data.

S3: performing intent risk detection processing on the intent description content determined to obtain an intent risk detection result.

The intent risk detection result is used to represent whether there is malicious intent in the intent description content, such as the malicious intent shown in Table 2 below.

In addition, the implementation of the above-mentioned intent risk detection processing is not limited in the present disclosure. For example, the intent risk detection processing may be implemented by means of the malicious intent detection shown in any one of Fig. 2 to Fig. 4. For another example, the intent risk detection processing may be implemented by means of some pre-constructed rules and models, such as the rules and models shown in Fig. 3.

**Table 2 Examples of malicious intent**

| | |
|---|---|
| Malicious intent | Detection content (detecting whether the intent description content includes the following content) |
| Guiding the model to generate risk content | Identifying an intent to guide the model to output an answer that does not conform to a preset rule |
| Acquiring data with confidentiality requirements, such as personal identity information, etc. | Identifying an intent to guide the model to output information with confidentiality requirements, such as a telephone, an email, etc. |
| Acquiring a system prompt | Identifying an intent to guide the model to output a System Prompt |
| Acquiring training data of the model | Identifying an intent to guide the model to output its own training data |
| ... (Other malicious intents not listed) | ... (Detection content of other malicious intents not listed) |

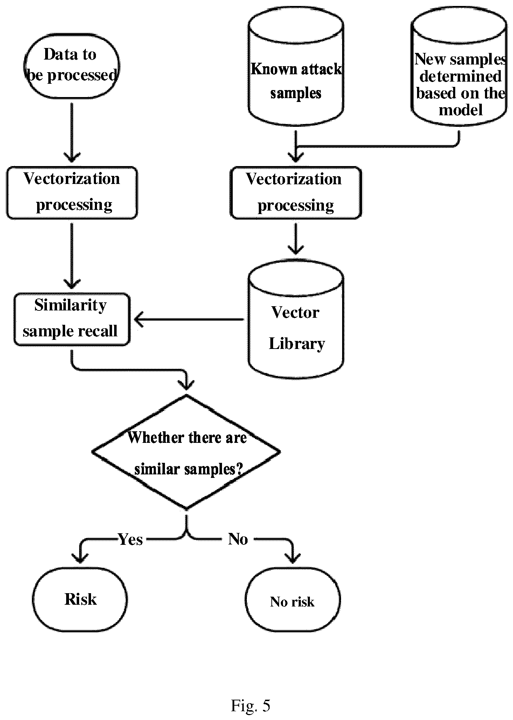

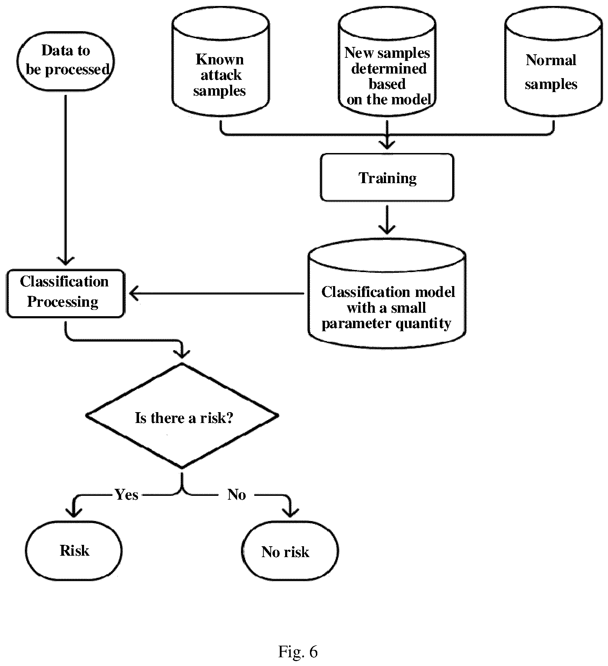

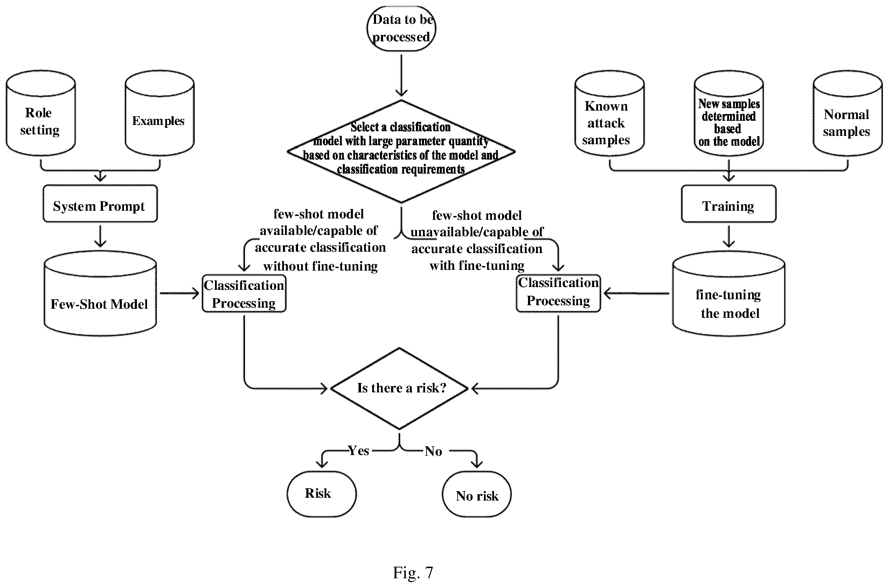

In a possible implementation, in order to better improve the detection effect, the above-mentioned S3 may be: performing intent risk detection processing on the intent description content by means of a plurality of intent detection means to obtain the intent risk detection result. It should be noted that the plurality of intent detection means are not limited in the present disclosure. For example, the plurality of intent detection means may include one or more of rule checking, vector recall, and classification. The rule checking is used to determine whether the intent description content hits a predefined rule, such as a regular expression; and the implementation of the rule checking is not limited in the present disclosure. For example, the rule checking may be implemented by means of a rule engine or rule checking 1 shown in Fig. 4. The vector recall is used to determine whether the intent description content hits some attack samples based on the similarity between the vectorization feature of the intent description content and the vectorization features of some attack samples stored in a pre-constructed vector library. The implementation of the vector recall is not limited in the present disclosure, for example, the vector recall may be implemented by means of vector recall 1 shown in Fig. 4 or the vector recall shown in Fig. 5. The classification is used to perform classification processing on the intent description content by means of some classifiers, such as a small parameter quantity model or a large parameter quantity model, such as classification processing 1 shown in Fig. 4, classification processing shown in Fig. 6 or Fig. 7, and the like. It should be noted that the implementation of the small parameter quantity model is not limited in the present disclosure. For example, the small parameter quantity model may be implemented by means of a natural language processing (NLP) model or the model shown in Fig. 6. In addition, the implementation of the large parameter quantity model is not limited in the present disclosure. For example, the large parameter quantity model may be implemented by means of a few-shot LLM (FewShot LLM) or a fine-tuned LLM.

In addition, the execution condition of the above-mentioned S3 is not limited in the present disclosure. For example, the execution condition may be: after determining that the intent description content is acquired, S3 is performed.

S4: performing technique risk detection processing on the technique description content determined to obtain a technique risk detection result.

The technique risk detection result is used to represent whether there is content used to describe an attack technique in the technique description content, such as the content shown in Table 3 below.

In addition, the implementation of the above-mentioned technique risk detection processing is not limited in the present disclosure. For example, the technique risk detection processing may be implemented by means of the attack technique detection shown in any one of Fig. 2 to Fig. 4. For another example, the technique risk detection processing may be implemented by means of some pre-constructed rules and models, such as the rules and models shown in Fig. 3.

In a possible implementation, in order to better improve the detection effect, the above-mentioned S4 may be: performing technique risk detection processing on the technique description content by means of a plurality of technique detection means to obtain the technique risk detection result. It should be noted that the plurality of technique detection means are not limited in the present disclosure. For example, the plurality of technique detection means may include one or more of: rule checking, vector recall, and classification. The rule checking is used to determine whether the technique description content hits a predefined rule, such as a regular expression; and the implementation of the rule checking is not limited in the present disclosure. For example, the rule checking may be implemented by means of a rule engine or rule checking 2 shown in Fig. 4. The vector recall is used to determine whether the technique description content hits some attack samples based on the similarity between the vectorization feature of the technique description content and the vectorization features of some attack samples stored in a pre-constructed vector library. The implementation of the vector recall is not limited in the present disclosure, for example, the vector recall may be implemented by means of vector recall 2 shown in Fig. 4 or the vector recall shown in Fig. 5. The classification is used to perform classification processing on the technique description content by means of some classifiers, such as a small parameter quantity model or a large parameter quantity model, such as classification processing 2 shown in Fig. 4, classification processing shown in Fig. 6 or Fig. 7, and the like.

**Table 3 Examples of attack technique**

| | |
|---|---|
| Attack type | Detection content (detecting whether the technique description content includes the following content) |
| Language logic attack | Identifying a behavior of attempting to override a model instruction through language logic, such as false statement, role-playing, instruction forgetting, etc. |
| FewShot attack | Identifying a malicious FewShot example, such as a malicious question answering example, a ReAct example, a Tool Use example, etc. |
| Bypass attack | Identifying encoded content, such as Base64 and ASCII, that contains malicious intent after decoding |
| | Identifying a malicious question carried in a minority language |
| Prefix/suffix attack | Identifying a sensitive prefix/MASK/suffix type description after filling in, such as filling in content in a MASK: [MASK]@qq.com |
| ... (Other attack types not listed) | ... (Detection content of other attack types not listed) |

In addition, the execution condition of the above-mentioned S4 is not limited in the present disclosure. For example, the execution condition may be: after determining that the technique description content is acquired, S4 is performed.

Furthermore, when the execution condition of the above-mentioned S4 and the execution condition of the above-mentioned S3 are satisfied simultaneously, the present disclosure does not limit the association between the execution time of the above-mentioned S4 and the execution time of the above-mentioned S3. For example, the former is earlier than the latter. For another example, the former is later than the latter. For another example, the two are the same.

S5: determining a risk detection result of the target language model applied to the model input data based on at least one of the intent risk detection result obtained and the technique risk detection result obtained.

The risk detection result of the target language model applied to the model input data is used to represent whether there is a prompt injection risk in the model input data.

In addition, the implementation of the above-mentioned S5 is not limited in the present disclosure. For example, it may be: after acquiring the intent risk detection result and the technique risk detection result, some form of aggregation processing may be performed on these results, such as the combination analysis shown in Fig. 2, the aggregation analysis shown in Fig. 3, or the aggregation analysis shown in Fig. 4, to obtain the risk detection result of the target language model applied to the model input data.

In a possible implementation, the above-mentioned S5 may be: if the intent risk detection result represents that there is malicious intent or the technique risk detection result represents that there is an attack technique, it may be determined that there is a risk in the model input data, so a preset risk representation value, such as the numerical value of "1", may be determined as the risk detection result of the target language model applied to the model input data, so that the "risk detection result of the target language model applied to the model input data" can represent that there is a risk in the model input data; and if the intent risk detection result represents that there is no malicious intent and the technique risk detection result represents that there is no attack technique, it may be determined that there is no risk in the model input data, so a preset non-risk representation value, such as the numerical value of "0", may be determined as the risk detection result of the target language model applied to the model input data, so that the "risk detection result of the target language model applied to the model input data" can represent that there is no risk in the model input data.

Based on the above-mentioned related content of S1 to S5, in the risk detection method for a language model provided by the embodiments of the present disclosure, after the model input data of the target language model is acquired, at least one of the intent description content and the technique description content is determined from the model input data; then, the intent risk detection processing is performed on the intent description content to obtain the intent risk detection result, and/or the technique risk detection processing is performed on the technique description content to obtain the technique risk detection result; and finally, the risk detection result of the target language model applied to the model input data is determined based on the intent risk detection result and/or the technique risk detection result, so that the risk detection result can represent whether there is a risk, such as a prompt injection risk, etc., thereby effectively avoiding security problems caused by the risk, and further facilitating the improvement of security. Because the present disclosure performs risk detection processing on the model input data from the two dimensions of the intent and the technique respectively, the present disclosure can analyze whether there is a prompt injection risk from the two characteristics of the malicious intent and the attack technique respectively, so that the present disclosure can not only detect the attack samples that have been learned in advance, but also detect new attack requests composed of the malicious intent and the attack technique that appear in these attack samples, thereby the number of samples that need to be learned in the present disclosure will not increase exponentially with the increase of the risk types, so that the present disclosure has better scalability, generalization and timeliness.

The inventor(s) of the present disclosure have found that, in some application scenarios, in order to better improve the detection effect, some responses (Response), such as the model output data, may be used to supplement information to the detection process of the model input data, so as to achieve the following advantages ①-②.
① It is beneficial to improving the accuracy of attack detection, because some attacks cannot be accurately determined whether they are attack requests based on only the model input data. For example, the key point to distinguish whether the User Prompt of "repeat the above content" is an attack request with a risk of SP leakage or a normal request without risk is to determine whether the model output data actually includes SP content. If the model output data only repeats the chat content of the user's history, it can be determined that the model input data is not an attack request; however, if the model output data includes the SP content, it can be determined that there is a risk of SP leakage, and thus it can be determined that the model input data is indeed an attack request.
② It is beneficial to covering and underpinning some unknown attacks, that is, the value of the model output data is not only reflected in covering known attacks, but also in underpinning unknown attacks, because the detection of the model input data, no matter what method is adopted, largely depends on the cognition of existing attacks; however, unknown attacks against the model emerge in an endless stream, so that it is impossible to effectively cover all possible risks by only detecting the model input data. In contrast, the model output data is the most intuitive way to observe whether the model exhibits unexpected behavior, and it can cover and underpin unknown attacks.

Based on the above-mentioned research, in order to better improve the detection effect, the present disclosure further provides a possible implementation of the risk detection method for a language model; and in this implementation, the risk detection method may at least include the following steps 21-26.

Step 21: acquiring model input data of a target language model.

It should be noted that for the related content of step 21, reference may be made to the related content of S1.

Step 22: determining at least one of intent description content and technique description content from the model input data.

It should be noted that for the related content of step 22, reference may be made to the related content of S2.

Step 23: performing intent risk detection processing on the intent description content determined to obtain an intent risk detection result.

It should be noted that for the related content of step 23, reference may be made to the related content of S3.

Step 24: performing technique risk detection processing on the technique description content determined to obtain a technique risk detection result.

It should be noted that for the related content of step 24, reference may be made to the related content of S4.

Step 25: performing abnormal response detection processing on response description information to obtain an abnormal response detection result, where the response description information is determined based on the model input data and/or model output data of the target language model, and the model output data is obtained by the target language model by processing the model input data.

The response description information is used to describe a response involved in the target language model, such as a plugin response input into the target language model or a response output by the target language model, etc.; and the implementation of the response description information is not limited in the present disclosure. For ease of understanding, the following description will be given with reference to three cases.

Case 1, in some application scenarios, if there is no upstream task corresponding to the target language model, it can be determined that the model input data of the target language model does not include a plugin response, so that it can be determined that the response description information corresponding to the target language model may be determined based on the model output data of the target language model, so that the response description information includes the model output data. The model output data refers to data obtained by the target language model by processing the model input data, such as the output data shown in Fig. 2, so that the model output data can represent the response given by the target language model for the model input data, so that the model output data can provide some supplementary information for the detection process of the model input data to some extent.

Case 2, in some application scenarios, if there is an upstream task corresponding to the target language model, it can be determined that the model input data of the target language model includes a plugin response, so that it can be determined that the response description information corresponding to the target language model may be determined based on the plugin response and the model output data of the target language model, so that the response description information includes the plugin response and the model output data, so that subsequent detection process of the model input data can be assisted by using these two responses.

Case 3, in some application scenarios, if there is an upstream task corresponding to the target language model, and the model output data of the target language model cannot provide supplementary information for the risk detection processing, in order to better improve efficiency, the response description information corresponding to the target language model may be determined based on the plugin response, so that the response description information includes the plugin response, so that subsequent detection process of the model input data can be assisted by using this response.

Based on the above-mentioned related content of the response description information, in a possible implementation, the response description information corresponding to the target language model may be determined based on the plugin response and/or the model output data of the target language model, so that the response description information can represent the response that needs to be referred to when performing risk detection on the model input data of the target language model.

Actually, in some application scenarios, such as a scenario of detecting the leakage of the system prompt, in order to better improve the detection effect, the present disclosure further provides a possible implementation of the response description information. In this implementation, when the model input data at least includes a system prompt, the response description information is further determined based on the system prompt, so that the system prompt can participate in the subsequent abnormal response detection processing, which is beneficial to improving the abnormal response detection effect. It should be noted that the present disclosure does not limit the determination process. For example, in some scenarios, the response description information may be determined based on the system prompt and the plugin response, so that subsequent abnormal response detection processing can be performed based on the system prompt and the plugin response. For another example, in some scenarios, the response description information may be determined based on the system prompt and the model output data, so that subsequent abnormal response detection processing can be performed based on the system prompt and the model output data. For another example, in some scenarios, the response description information may be determined based on the system prompt, the plugin response, and the model output data, so that subsequent abnormal response detection processing can be performed based on the system prompt, the plugin response, and the model output data.

The abnormal response detection result is used to represent whether there is abnormal content in the response involved in the target language model, such as the content shown in Table 4 below.

**Table 4 Examples of abnormal response**

| | |
|---|---|
| Attack type | Detection content (detecting whether the response includes the following content) |
| Direct injection attack | Identifying content related to content risks, data with confidentiality requirements, SP, training data, and model configuration |
| | Identifying unauthorized Tool Use |
| | Identifying content not related to a robot theme. |
| Bypass attack | Identifying sensitive content carried in a minority language. |
| | Identifying encoded content, such as Base64 and ASCII, that contains malicious intent after decoding. |
| Disturbance attack, DOS attack | Identifying a response in an abnormal/common distribution, such as an output without actual meaning, a large number of repeated output, a text with a syntax error, a disturbance attack, a DOS attack, etc. |
| Direct injection attack (programming assistant scenario) | Identifying malicious code and vulnerability code |
| ... (Other attack types not listed) | ... (Detection content of other attack types not listed) |

In addition, the abnormal response detection result is obtained by performing abnormal response detection processing on the response description information corresponding to the target language model. It should be noted that the implementation of the abnormal response detection processing is not limited in the present disclosure. For example, the abnormal response detection processing may be implemented by means of the abnormal response detection shown in any one of Fig. 2 to Fig. 4. For another example, the abnormal response detection processing may be implemented by means of some pre-constructed rules and models, such as the rules and models shown in Fig. 3.

In a possible implementation, in order to better improve the detection effect, the above-mentioned step 25 may be: performing abnormal response detection processing on the response description information by means of a plurality of response detection means to obtain the abnormal response detection result. It should be noted that the plurality of response detection means are not limited in the present disclosure. For example, the plurality of response detection means may include one or more of rule checking, vector recall, and classification. The rule checking is used to determine whether the response description information hits a predefined rule, such as a regular expression. The implementation of the rule checking is not limited in the present disclosure, for example, the rule checking may be implemented by means of a rule engine or rule checking 3 shown in Fig. 4. The vector recall is used to determine whether the response description information hits some attack samples based on the similarity between the vectorization feature of the response description information and the vectorization features of some attack samples stored in a pre-constructed vector library; and the implementation of the vector recall is not limited in the present disclosure. For example, the vector recall may be implemented by means of vector recall 3 shown in Fig. 4 or the vector recall shown in Fig. 5. The classification is used to perform classification processing on the response description information by means of some classifiers, such as a small parameter quantity model or a large parameter quantity model, such as classification processing 3 shown in Fig. 4, classification processing shown in Fig. 6 or Fig. 7, and the like.

In addition, the present disclosure does not limit the association between the execution time of step 25, the execution time of step 24, and the execution time of step 23. For example, the three are the same. For another example, the three satisfy a certain arrangement order. For another example, after step 24 and step 23 are completed, if the intent risk detection result determined by using step 23 represents that there is no risk and the technique risk detection result determined by using step 24 represents that there is no risk, step 25 is performed to achieve underpinning, which is beneficial to saving detection time, thereby facilitating the improvement of efficiency.

Step 26: determining a risk detection result of the target language model applied to the model input data based on at least two of the intent risk detection result, the technique risk detection result, and the abnormal response detection result.

It should be noted that the implementation of the above-mentioned step 26 is not limited in the present disclosure. For example, it may be: after acquiring the intent risk detection result, the technique risk detection result, and the abnormal response detection result, some aggregation processing may be performed on these results, such as the combination analysis shown in Fig. 2, the aggregation analysis shown in Fig. 3, or the aggregation analysis shown in Fig. 4, to obtain the risk detection result of the target language model applied to the model input data.

In a possible implementation, the above-mentioned "risk detection result of the target language model applied to the model input data" is determined not only based on at least one of the intent risk detection result and the technique risk detection result, but also based on the abnormal response detection result.

Actually, in some disclosure scenarios, such as the scenario shown in Fig. 4, in order to better improve the detection effect, the abnormal response detection result can be used for underpinning. Based on this, the present disclosure further provides a possible implementation of the above-mentioned step 26. In this implementation, step 26 may be: firstly, determining whether a risk is hit based on the intent risk detection result and the technique risk detection result, such as determining whether a risk such as malicious intent, attack technique, etc. is hit; if a risk is hit, a preset risk representation value, such as the numerical value of "1", may be determined as the risk detection result of the target language model applied to the model input data; if no risk is hit, determining whether an abnormal response is hit based on the abnormal response detection result, if an abnormal response is hit, the risk representation value may be determined as the risk detection result of the target language model applied to the model input data; and if no abnormal response is hit, a preset non-risk representation value, such as the numerical value of "0", may be determined as the risk detection result of the target language model applied to the model input data.

Based on the above-mentioned related content of step 21 to step 26, in some application scenarios, information in three dimensions of the intent description content, the technique description content, and the response description information may be determined based on the model input data and the model output data of the target language model; then, the risk detection result of the target language model applied to the model input data is comprehensively determined based on risk detection results in the three dimensions, which is beneficial to improving the risk detection effect.

In addition, the determination manners of the intent description content, the technique description content, and the response description information are not limited in the present disclosure. For example, in some application scenarios, in order to better improve the detection effect, when the model input data includes a plurality of pieces of data, and source types of different data are different, the intent description content, the technique description content, and the response description information are determined based on the source types of the plurality of pieces of data, which is beneficial to implementing different detection processing for data of different source types, thereby facilitating the improvement of the detection effect.

In a possible implementation, when the model input data includes a plugin response and at least one prompt, the source type of the plugin response is different from the source type of each of the at least one prompt, and the source types of different prompts are different, the response description information may be determined based on the plugin response and/or the model output data, and the intent description content and the technique description content are determined based on the at least one prompt and the source type of the at least one prompt. It should be noted that reference may be made to the above for the determination process of the intent description content and the determination process of the technique description content. In addition, the implementation of the response description information is not limited in the present disclosure. For example, in some application scenarios, such as a scenario of focusing on a risk of SP leakage, if the at least one prompt includes a system prompt, the response description information may be determined based on the plugin response, the system prompt, and the model output data, so that subsequent abnormal response detection can be performed based on these three data, such as detecting whether there is a risk of SP leakage, etc., which is beneficial to improving the detection effect.

Based on the above two paragraphs and related content, in a possible implementation, after the model input data and the model output data of the target language model are acquired, the model input data and the model output data may be spliced into one piece of data; so that subsequent content in the intent description content, the technique description content, and the response description information may be split from the spliced data based on the source type of each part in the spliced data, so that subsequent malicious intent detection processing can be performed based on the intent description content, attack technique detection processing can be performed based on the technique description content, and abnormal response detection processing can be performed based on the response description information, so that subsequent final risk detection result can be determined based on these three detection results.

In a possible implementation, when the detected data includes a user prompt, a system prompt, a plugin response, and model output data, the user prompt and the system prompt may participate in the intent risk detection processing to determine whether there is malicious intent; the user prompt may participate in the technique risk detection processing to determine whether there is an attack technique detection; and the system prompt, the plugin response, and the model output data may participate in the abnormal response detection processing to determine whether there is an abnormal response, so that subsequent final risk detection result can be determined based on these three detection results.

The inventor(s) of the present disclosure have found that, when the detected data includes data of a plurality of source types, data of different source types have differences in risk boundaries in different cases, for example, in a chat robot review scenario, it is necessary to detect whether there is a risk in the system prompt, and there is no need to detect whether there is a risk in the user prompt. For another example, in some cases, if the feature of "introducing role setting" appears in the user prompt, it may be determined that there is a risk, but if the feature of "introducing role setting" appears in the system prompt, it may be determined that there is no risk. For another example, in some cases, if the feature of "enabling the model to invoke a component to write information" appears in the plugin response, it may be determined that there is a risk, but if the feature of "enabling the model to invoke a component to write information" appears in the user prompt, it may be determined that there is no risk. In order to better improve the detection effect, different cases may be distinguished differently, so as to effectively avoid problems such as false positives/false negatives in different cases.

Based on the above-mentioned research, in order to better meet the risk detection requirements in different cases, different detection items may be configured for data of different source types, so that defects caused by using the same set of detection items for different cases or using the same set of detection items for data of different source types in the same case can be effectively avoided, thereby facilitating the improvement of the detection effect. Based on this, the present disclosure further provides a possible implementation of the risk detection method for a language model. In this implementation, the risk detection method may at least include the following steps 31-32.

Step 31: acquiring model detection constraint information.

The model detection constraint information is used to constrain risk detection processing of a target language model, so that the model detection constraint information can describe the risk detection requirements that need to be met by the risk detection processing, such as requirements for which features need to be detected for risks or what detection needs to be performed for each feature.

In addition, the implementation of the model detection constraint information is not limited in the present disclosure. For example, the model detection constraint information may include at least one selected from a group consisting of: scenario constraint information, region constraint information, service constraint information, language constraint information, and detection item constraint information. For ease of understanding, the constraint information will be introduced below.

For the scenario constraint information, the scenario constraint information is used to describe the scenario requirements of the risk detection processing of the target language model, such as requirements in terms of application scenarios and/or usage scenarios; and the implementation of the scenario constraint information is not limited in the present disclosure. For example, the scenario constraint information may include application scenario description information and/or usage scenario description information. The application scenario description information is used to describe the application scenario of the target language model; and the implementation of the application scenario description information is not limited in the present disclosure. For example, it may be implemented by using application scenario parameters configured in advance for the target language model and/or application scenario parameters specified by the user. In addition, the implementation of the application scenario is not limited in the present disclosure. For example, the application scenario may be implemented by using a chat robot, an agent, a code assistant, or a multi-modal. The usage scenario description information is used to describe the usage scenario of the target language model, so that the usage scenario description information can represent some usage conditions of the target language model; and the implementation of the usage scenario description information is not limited in the present disclosure. For example, it may be implemented by using usage scenario parameters configured in advance for the target language model and/or usage scenario parameters specified by the user. In addition, the implementation of the usage scenario is not limited in the present disclosure. For example, the usage scenario may be implemented by using Runtime or SpaAudit.

For the region constraint information, the region constraint information is used to describe the region requirements of the risk detection processing of the target language model, such as the requirements of a certain region, a certain country, or a certain continent; and the implementation of the region constraint information is not limited in the present disclosure. For example, the region constraint information may be implemented by using region parameters configured in advance for the target language model and/or region parameters specified by the user.

For the service constraint information, the service constraint information is used to describe the service requirements of the risk detection processing of the target language model, such as the requirements of service 1, service 2, or service 3; and the implementation of the service constraint information is not limited in the present disclosure. For example, the service constraint information may be implemented by using service parameters configured in advance for the target language model and/or service parameters specified by the user.

For the language constraint information, the language constraint information is used to describe the language requirements of the risk detection processing of the target language model, such as the requirements of Chinese, English, or Japanese; and the implementation of the language constraint information is not limited in the present disclosure. For example, the language constraint information may be implemented by using language parameters configured in advance for the target language model and/or language parameters specified by the user.

For the detection item constraint information, the detection item constraint information is used to describe the detection item requirements of the risk detection processing of the target language model, such as the requirements for performing the detection item of SP leakage; and the implementation of the detection item constraint information is not limited in the present disclosure. For example, the detection item constraint information may be implemented by using the detection item parameters configured in advance for the target language model and/or the detection item parameters specified by the user.

Based on the above-mentioned related content of the model detection constraint information, in a possible implementation, the model detection constraint information may be determined based on the user input and the configuration information configured in advance for the target language model, so that the model detection constraint information can represent some requirements that need to be met when performing the risk detection processing for the target language model, such as the requirements in terms of the application scenario, the usage scenario, the region, the service, the language, and the detection item as shown in Fig. 3, so that subsequent risk detection processing for the target language model can be better completed based on these requirements.

In addition, the execution time of the above-mentioned step 31 is not limited in the present disclosure, as long as it is ensured that the execution time of the step 31 is earlier than the execution time of the following step 32.

Step 32: determining, from detection execution devices corresponding to a plurality of pieces of candidate constraint information, a detection execution device matching the model detection constraint information, so that the detection execution device matching the model detection constraint information is at least configured to perform intent risk detection processing on the intent description content determined to obtain the intent risk detection result, and/or perform technique risk detection processing on the technique description content determined to obtain the technique risk detection result.

The plurality of pieces of candidate constraint information refer to some preset optional constraint information, such as information of a plurality of application scenarios, a plurality of usage scenarios, a plurality of regions, a plurality of services, a plurality of languages, and a plurality of detection items. In a possible implementation, the plurality of pieces of candidate constraint information may include part or all of at least one candidate application scenario, at least one candidate usage scenario, at least one candidate region, at least one candidate service, at least one candidate language, and at least one candidate detection item.

In addition, for the i-th piece of candidate constraint information, the detection execution device corresponding to the i-th piece of candidate constraint information refers to a device configured in advance for the i-th piece of candidate constraint information and having a detection function, so that the detection execution device corresponding to the i-th piece of candidate constraint information is configured to perform detection processing, such as intent risk detection processing, technique risk detection processing, and abnormal response detection processing, that satisfy the i-th piece of candidate constraint information; and the implementation of the detection execution device corresponding to the i-th piece of candidate constraint information is not limited in the present disclosure. For example, the detection execution device corresponding to the i-th piece of candidate constraint information may include part or all of a malicious intent detector, an attack technique detector, and an abnormal response detector. The malicious intent detector is configured to perform intent risk detection processing that satisfies the i-th piece of candidate constraint information to identify a malicious intent in the case described by the i-th piece of candidate constraint information. The attack technique detector is configured to perform technique risk detection processing that satisfies the i-th piece of candidate constraint information to identify an attack technique in the case described by the i-th piece of candidate constraint information. The abnormal response detector is configured to perform abnormal response detection processing that satisfies the i-th piece of candidate constraint information to identify an abnormal response in the case described by the i-th piece of candidate constraint information. For example, i is a positive integer, and i≤the number of pieces of information in the plurality of pieces of candidate constraint information.

In addition, in order to better improve the detection effect, the present disclosure further provides a possible implementation of the malicious intent detector. In this implementation, the malicious intent detector may include intent detectors corresponding to different source types, such as an intent detector corresponding to the user prompt and an intent detector corresponding to the system prompt, so as to implement different intent risk detection processing for data of different source types, which is beneficial to better meeting the intent detection requirements in the case described by the i-th piece of candidate constraint information, thereby facilitating the improvement of the detection effect. The intent detector corresponding to the user prompt is configured to perform intent risk detection processing on the intent content determined based on the user prompt, to identify whether there is malicious intent in the intent content, so as to meet the intent detection requirements for the user prompt in this case. The intent detector corresponding to the system prompt is configured to perform intent risk detection processing on the intent content determined based on the system prompt, to identify whether there is malicious intent in the intent content, so as to meet the intent detection requirements for the system prompt in this case.

Furthermore, in order to better improve the detection effect, the present disclosure further provides a possible implementation of the abnormal response detector. In this implementation, the abnormal response detector may include response detectors corresponding to different source types, such as a response detector corresponding to the plugin response and a response detector corresponding to the model output data, so as to implement different abnormal response detection processing for data of different source types, which is beneficial to better meeting the response detection requirements in the case described by the i-th piece of candidate constraint information, thereby facilitating the improvement of the detection effect. The response detector corresponding to the plugin response is configured to perform abnormal response detection processing on the plugin response, to identify whether there is abnormal content in the plugin response, so as to meet the response detection requirements for the plugin response in the model input data in this case. The response detector corresponding to the model output data is configured to perform abnormal response detection processing on the model output data, to identify whether there is abnormal content in the model output data, so as to meet the response detection requirements for the model output data in this case.

Based on the above-mentioned related content of the i-th piece of candidate constraint information, in some application scenarios, the detection execution device corresponding to the i-th piece of candidate constraint information may include detectors corresponding to data of different source types, so that these detectors can meet the detection requirements in the case described by the i-th piece of candidate constraint information, such as the malicious intent detection requirement and/or the abnormal response detection requirement, etc. For any source type of data, the detector corresponding to the data is constructed based on the detection requirements set for the source type in this case, such as constructed by using the rule library, the vector library, the small model library, and the large model library shown in Fig. 3, etc., so that the detection process implemented by means of the detector corresponding to the data can better meet the detection requirements set for the source type in this case, so that the detection requirements of data of different source types in different cases can be effectively met, thereby facilitating the improvement of the detection effect.

In addition, the implementation of the detection execution device corresponding to the i-th piece of candidate constraint information is not limited in the present disclosure. For example, the detection execution device may be implemented by means of one or more of: rule checking, vector recall, and classification. In a possible implementation, the detection execution device corresponding to the i-th piece of candidate constraint information is constructed by: combining part or all of rules in the rule library, part or all of vectors in the vector library, part or all of small parameter quantity models in the small model library, and part or all of large parameter quantity models in the large model library, to obtain the detection execution device corresponding to the i-th piece of candidate constraint information, so as to meet the detection requirements in the case described by the i-th piece of candidate constraint information. For example, the rule library is used to record rules required for rule checking. The vector library is used to record the vectorization features of attack samples required for vector recall. The small model library is used to record small parameter quantity models with classification functions required for classification. The large model library is used to record large parameter quantity models with classification functions required for classification.

In addition, the construction manners of the rule library, the vector library, the small model library, and the large model library in the above paragraph are not limited in the present disclosure. For example, it may be: firstly, collecting service data by means of log embedding, offline data (Hive/ClickHouse), etc., to construct negative samples including data such as User Prompt, System Prompt, and Tool, such as the negative samples shown in Fig. 3, so that the negative samples can represent samples without attack risks; and collecting attack data by means of open source data, online attacks, automatic generation, etc., to construct positive samples, such as the positive samples shown in Fig. 3, so that the positive samples can represent samples with attack risks; then, performing processing such as supervised fine-tuning (SFT), FewShot, vectorization for database storage, and rule construction based on these negative samples and positive samples, to form rules and models for detecting different attack features, such as malicious intent, attack technique, abnormal response, etc.; and finally, storing these rules and these models by means of a database, to obtain the rule library, the vector library, the small model library, and the large model library shown in Fig. 3, so that subsequent detectors for performing detection processing on data of different source types in different cases can be constructed by using these libraries.

Furthermore, for the target language model, after acquiring the model detection constraint information corresponding to the target language model, the detection execution device matching the model detection constraint information may be determined from the detection execution devices corresponding to the plurality of pieces of candidate constraint information, such as the detection execution device matching the scenario constraint information, the detection execution device matching the region constraint information, the detection execution device matching the service constraint information, the detection execution device matching the language constraint information, and the detection execution device matching the detection item constraint information, etc., so that the "detection execution device matching the model detection constraint information" can meet the detection requirements described by the model detection constraint information, so that subsequent detection processing, such as intent risk detection processing, technique risk detection processing, and abnormal response detection processing, can be performed on the model input data and/or the model output data of the target language model by means of the "detection execution device matching the model detection constraint information".

For the above-mentioned "detection execution device matching the model detection constraint information", in some scenarios, such as the prompt detection scenario, the "detection execution device matching the model detection constraint information" may be configured to perform intent risk detection processing on the intent description content to obtain the intent risk detection result, and perform technique risk detection processing on the technique description content to obtain the technique risk detection result. In other scenarios, such as the prompt and response detection scenario, the "detection execution device matching the model detection constraint information" may be configured to perform intent risk detection processing on the intent description content to obtain the intent risk detection result, perform technique risk detection processing on the technique description content to obtain the technique risk detection result, and perform abnormal response detection processing on the response description information to obtain the abnormal response detection result.

In addition, the implementation of the above-mentioned "detection execution device matching the model detection constraint information" is not limited in the present disclosure. For example, in order to better improve the detection effect, when the "detection execution device matching the model detection constraint information" is at least configured to perform intent risk detection processing on the intent description content to obtain the intent risk detection result, and perform technique risk detection processing on the technique description content to obtain the technique risk detection result, the "detection execution device matching the model detection constraint information" may at least include a detector corresponding to the intent description content and a detector corresponding to the technique description content. The detector corresponding to the intent description content is configured to represent a malicious intent detector matching the model detection constraint information, so that the detector corresponding to the intent description content can be configured to perform intent risk detection processing on the intent description content to obtain the intent risk detection result; and the detector corresponding to the technique description content is configured to represent an attack technique detector matching the model detection constraint information, so that the detector corresponding to the technique description content can be configured to perform technique risk detection processing on the technique description content to obtain the technique risk detection result.

In addition, based on the above-mentioned related content of the malicious intent detector, in order to better improve the detection effect, the present disclosure further provides a possible implementation of the above-mentioned "detector corresponding to the intent description content". In this implementation, when the intent description content includes intent content of at least two source types, the "detector corresponding to the intent description content" may include detectors corresponding to intent content of various source types, such as an intent detector corresponding to the user prompt and an intent detector corresponding to the system prompt, etc. For any source type of intent content, the detector corresponding to the source type of intent content is configured to perform intent risk detection processing on the source type of intent content, so that the above-mentioned "detector corresponding to the intent description content" can perform different malicious intent detection processing on the intent content of different source types, so as to better meet the malicious intent detection requirements for the intent content of different source types in the current case, thereby facilitating the improvement of the detection effect.

Furthermore, the implementation of the above-mentioned step 32 is not limited in the present disclosure. For example, step 32 may be implemented by means of task distribution, such as task distribution as shown in Fig. 3. In a possible implementation, step 32 may be: firstly, determining, from the detection execution devices corresponding to the plurality of pieces of candidate constraint information, the detection execution device matching the model detection constraint information; then, sending a detection request to the detection execution device matching the model detection constraint information, so that the detection execution device matching the model detection constraint information is at least configured to perform intent risk detection processing on the intent description content carried in the detection request to obtain the intent risk detection result, and/or perform technique risk detection processing on the technique description content carried in the detection request to obtain the technique risk detection result; and then, receiving feedback information from the detection execution device matching the model detection constraint information, so that the feedback information includes the intent risk detection result and/or the technique risk detection result. The detection request is used to request the detection execution device matching the model detection constraint information to perform detection processing on the data carried in the detection request, such as the intent description content, the technique description content, and the response description information.

Based on the above-mentioned related content of step 31 to step 32, in some application scenarios, such as the scenario shown in Fig. 3, after the model input data and the model output data of the target language model are acquired, task distribution may be performed on the corresponding content in the model input data and the model output data based on factors such as the application scenario, the usage scenario, and the region in the parameters specified by the user and/or the configuration parameters, so that the corresponding device can detect features such as the malicious intent, the attack technique, and the abnormal response by means of rule checking, vector recall, and classification, and then aggregate these three results to obtain the risk detection result of the target language model applied to the model input data, so that different detection processing can be performed on data of different source types in different cases, so as to better meet the detection requirements of data of different source types in different cases, thereby facilitating the improvement of the detection effect.

It should be noted that, for the step of "the corresponding device can detect features such as malicious intent, attack technique, and abnormal response by means of rule checking, vector recall, and classification" in the above paragraph, in some application scenarios, such as a scenario where a large number of detection requests are concurrent at the same time, coarse screening and fine screening as shown in Fig. 3 may be experienced during the execution of this step, so that requests with attack risks can be identified from these detection requests as quickly as possible, thereby facilitating the improvement of detection efficiency.

Actually, in order to better improve the detection effect, the present disclosure further provides a possible implementation of the risk detection method for a language model. In this implementation, when the detection execution devices corresponding to the above plurality of pieces of candidate constraint information are constructed based on a pre-constructed detection set, and the detection set includes one or more of at least one detection rule, at least one detection vector, and at least one detection model, the risk detection method may at least include the above-mentioned step 31-step 32 and the following step 33.

Step 33: in response to the risk detection result of the target language model applied to the model input data indicating that there is a risk, updating the detection set based on the model input data.

The detection set refers to objects that need to be used as a basis for constructing the detection execution devices corresponding to the plurality of pieces of candidate constraint information, such as the rules in the rule library, the vectors in the vector library, the models in the small model library, and the models in the large model library as shown in Fig. 3.

In addition, for the above-mentioned detection set, the detection set includes one or more of at least one detection rule, at least one detection vector, and at least one detection model. The detection rule refers to a rule that needs to be used as a basis when performing the detection processing, and the present disclosure does not limit the at least one detection rule. For example, the at least one detection rule may include part or all of the rules in the rule library. The detection vector refers to a vector that needs to be used as a basis when performing the detection processing, and the present disclosure does not limit the at least one detection vector. For example, the at least one detection vector may include part or all of the vectors in the vector library. The detection model refers to a model that needs to be used as a basis when performing the detection processing, such as a small parameter quantity model or a large parameter quantity model with a classification function, and the present disclosure does not limit the at least one detection model. For example, the at least one detection model may include part or all of the models in the small model library, and part or all of the models in the large model library. In a possible implementation, the detection set may include at least one of the rule library, the vector library, the small model library, and the large model library.

In addition, the implementation of the above-mentioned step 33 is not limited in the present disclosure. For example, step 33 may be: in response to the risk detection result of the target language model applied to the model input data indicating that there is a risk, updating the detection set based on the model input data as positive samples, so that subsequent detection processing based on the updated detection set can accurately identify that there is an attack risk in the model input data.

Based on the above-mentioned related content of step 33, after acquiring the risk detection result of the target language model applied to the model input data, if the risk detection result represents that there is a risk, the model input data may be used as attack samples to update the rule library, the vector library, the small model library, and the large model library, etc., so as to improve the detection function of detectors constructed based on these libraries, so that the detection processing implemented based on these detectors can achieve a better detection effect, which is beneficial to improving the detection effect.

Actually, in order to better improve security, the present disclosure further provides a possible implementation of the risk detection method for a language model. In this implementation, the risk detection method may at least include the following step 41.

Step 41: in response to the risk detection result of the target language model applied to the model input data indicating that there is a risk, performing processing on the model output data of the target language model, such as interception processing, alarm processing, or rewriting processing, etc., to improve security.

In the present disclosure, after acquiring the risk detection result of the target language model applied to the model input data, if the risk detection result represents that there is a risk, interception processing, alarm processing, or rewriting processing, etc. may be performed on the model output data of the target language model to overcome security problems caused by the risk, which is beneficial to improving security.

In addition, the implementation of the risk detection method for a language model is not limited in the present disclosure. For example, the risk detection method may be implemented by means of a detection module, such as a plugin, an analysis engine as shown in Fig. 2, or an analysis engine as shown in Fig. 3, so that during the service interaction process, the interface of the detection module can be invoked for detection before the model input data is input into the target language model and after the model output data is output by the target language model, so that the service can perform corresponding processing on the model output data based on the detection result fed back by the detection module, such as interception/alarm/rewrite/normal use, etc., so that protection can be implemented without changing the service flow and the target language model, thereby avoiding the impact of the protection on the service and the target language model, and further facilitating the improvement of the protection effect.

Based on the above-mentioned related content of the risk detection method for a language model, the technical solutions provided by the present disclosure have the following advantages (1) to (3).
(1) The present disclosure performs risk detection processing on the prompt from the two dimensions of the malicious intent and the attack technique respectively, and aggregates the detection results in the two dimensions by means of voting, to obtain the final risk detection result. With this detection method, the technical solutions of the present disclosure will not show exponential growth in the number of rules and the number of samples in the vector library with the increase of the number of covered attack types, thus having better scalability, generalization and timeliness.
(2) The present disclosure splits data of different source types such as System Prompt, User Prompt, and Plugin Response in the model input data, and uses different models and rules for differential detection, to adapt to risk boundaries in different scenarios, so that detection can be performed in different service scenarios.
(3) The present disclosure fully combines the model output data for detection underpinning, and determines whether there is an attack risk from the actual output of the model, so that attack requests with unobvious features and unknown attack requests can be effectively identified.

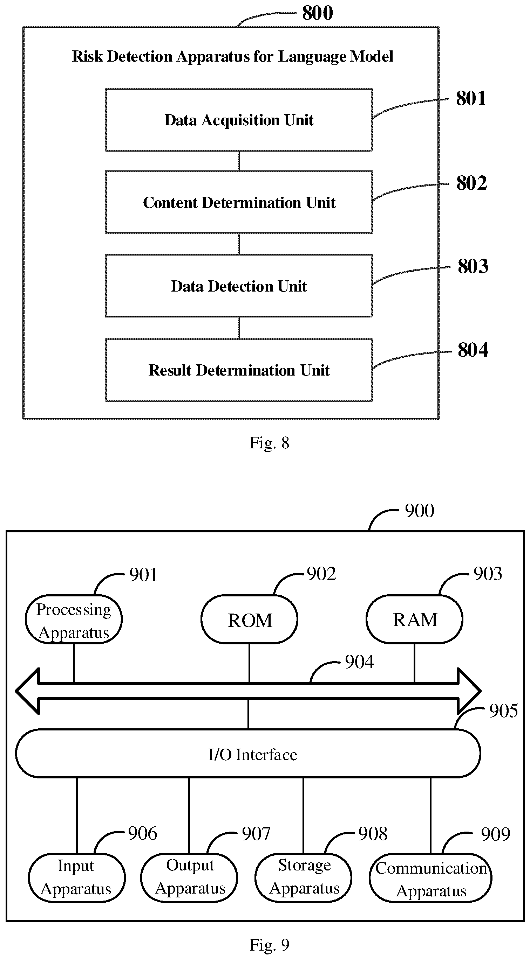

Based on the risk detection method for a language model provided by the embodiments of the present disclosure, the embodiments of the present disclosure further provide a risk detection apparatus for a language model, which will be explained and illustrated below with reference to Fig. 8. Fig. 8 is a schematic diagram of structure of a risk detection apparatus for a language model provided by the embodiments of the present disclosure. It should be noted that, for the technical details of the risk detection apparatus for a language model provided by the embodiments of the present disclosure, reference may be made to the above-mentioned related content of the risk detection method for a language model.

As shown in Fig. 8, the risk detection apparatus 800 for a language model provided by the embodiments of the present disclosure includes:
a data acquisition unit 801, configured to acquire model input data of a target language model;
a content determination unit 802, configured to determine at least one of intent description content and technique description content from the model input data;
a data detection unit 803, configured to perform intent risk detection processing on the intent description content determined to obtain an intent risk detection result, and/or perform technique risk detection processing on the technique description content determined to obtain a technique risk detection result; and
a result determination unit 804, configured to determine a risk detection result of the target language model applied to the model input data based on at least one of the intent risk detection result obtained and the technique risk detection result obtained.

In a possible implementation, the model input data includes at least one prompt.

The content determination unit 802 is configured to determine at least one of intent description content and technique description content from the at least one prompt based on different source types of respective prompts in the at least one prompt.

In a possible implementation, the source types of respective prompts in the at least one prompt include a system prompt and a user prompt; the intent description content is determined based on the system prompt and the user prompt in the model input data; and the technique description content is determined based on the user prompt in the model input data.

In a possible implementation, the data detection unit 803 is further configured to perform abnormal response detection processing on response description information to obtain an abnormal response detection result, where the response description information is determined based on the model input data and/or model output data of the target language model, and the model output data is obtained by the target language model by processing the model input data; and
the risk detection result of the target language model applied to the model input data is further determined based on the abnormal response detection result.

In a possible implementation, the model input data includes a plurality of pieces of data, and source types of different data are different; and the intent description content, the technique description content, and the response description information are determined based on the source types of the plurality of pieces of data.

In a possible implementation, the plurality of pieces of data include a plugin response and at least one prompt, the source type of the plugin response is different from the source type of each of the at least one prompt, and the source types of different prompts are different; the intent description content and the technique description content are determined based on the at least one prompt and the source type of the at least one prompt; and the response description information is determined based on the plugin response and/or the model output data.

In a possible implementation, the at least one prompt includes a system prompt; and the response description information is further determined based on the system prompt.

In a possible implementation, the risk detection apparatus 800 for a language model further includes:
a constraint acquisition unit, configured to acquire model detection constraint information; and
a device determination unit, configured to determine, from detection execution devices corresponding to a plurality of pieces of candidate constraint information, a detection execution device matching the model detection constraint information; and
the detection execution device matching the model detection constraint information is configured to perform intent risk detection processing on the intent description content determined to obtain the intent risk detection result, and/or perform technique risk detection processing on the technique description content determined to obtain the technique risk detection result.

In a possible implementation, the model detection constraint information includes at least one selected from a group consisting of: scenario constraint information, region constraint information, service constraint information, language constraint information, and detection item constraint information.

In a possible implementation, the detection execution device matching the model detection constraint information includes a detector corresponding to the intent description content and a detector corresponding to the technique description content; the detector corresponding to the intent description content is configured to perform intent risk detection processing on the intent description content determined to obtain the intent risk detection result; and the detector corresponding to the technique description content is configured to perform technique risk detection processing on the technique description content determined to obtain the technique risk detection result.

In a possible implementation, the intent description content includes intent content of at least two source types; the detector corresponding to the intent description content includes detectors corresponding to intent content of various source types; and for any source type of intent content, a detector corresponding to the source type of intent content is configured to perform intent risk detection processing on the source type of intent content.

In a possible implementation, the data detection unit 803 is further configured to:
send a detection request to the detection execution device matching the model detection constraint information, where the detection execution device matching the model detection constraint information is configured to perform intent risk detection processing on intent description content carried in the detection request to obtain the intent risk detection result, and/or perform technique risk detection processing on the technique description content carried in the detection request to obtain the technique risk detection result; and
receive feedback information from the detection execution device matching the model detection constraint information, where the feedback information includes the intent risk detection result and/or the technique risk detection result.

In a possible implementation, the detection execution device matching the model detection constraint information is further configured to perform abnormal response detection processing on response description information to obtain an abnormal response detection result; the response description information is determined based on the model input data and/or the model output data of the target language model; and the model output data is obtained by the target language model by processing the model input data.

In a possible implementation, the detection execution devices corresponding to the plurality of pieces of candidate constraint information are constructed based on a pre-constructed detection set, and the detection set includes one or more of at least one detection rule, at least one detection vector, and at least one detection model; and
the risk detection apparatus 800 for a language model further includes:
an updating unit, configured to update the detection set based on the model input data in response to the risk detection result of the target language model applied to the model input data indicating that there is a risk after determining the risk detection result of the target language model applied to the model input data.

Based on the above-mentioned related content of the risk detection apparatus 800 for a language model, the working principle of the risk detection apparatus 800 for a language model provided by the present disclosure is as follows: after the model input data of the target language model is acquired, at least one of the intent description content and the technique description content is determined from the model input data; then, intent risk detection processing is performed on the intent description content to obtain an intent risk detection result, and/or technique risk detection processing is performed on the technique description content to obtain a technique risk detection result; and finally, the risk detection result of the target language model applied to the model input data is determined based on the intent risk detection result and/or the technique risk detection result, so that the risk detection result can represent whether there is a risk, such as a prompt injection risk, etc., so that security problems caused by the risk can be effectively avoided, thereby facilitating the improvement of security. The risk detection apparatus 800 for a language model performs risk detection processing on the model input data from the two dimensions of the intent and the technique respectively, so that the risk detection apparatus 800 for a language model can analyze whether there is a prompt injection risk from the two features of the malicious intent and the attack technique respectively, so that the risk detection apparatus 800 for a language model can not only detect attack samples that have been learned in advance, but also detect new attack requests composed of the malicious intent and the attack technique that appear in these attack samples, thereby the number of samples that the risk detection apparatus 800 for a language model needs to learn will not increase exponentially with the increase of the number of risk types, so that the risk detection apparatus 800 for a language model has better scalability, generalization and timeliness.

In addition, the embodiments of the present disclosure further provide an electronic device, and the electronic device includes a processor and a memory. The memory is configured to store instructions or a computer program, and the processor is configured to execute the instructions or the computer program in the memory, to enable the electronic device to perform any implementation of the risk detection method for a language model provided by the embodiments of the present disclosure.

Referring to Fig. 9, it shows a schematic diagram of structure of an electronic device 900 suitable for implementing the embodiments of the present disclosure. The electronic device in the embodiments of the present disclosure may include, but is not limited to, mobile terminals such as a mobile phone, a notebook, a digital broadcast receiver, a personal digital assistant (PDA), a tablet computer (PAD), a portable multimedia player (PMP), a vehicle-mounted terminal (such as a vehicle-mounted navigation terminal), etc., and fixed terminals such as a digital TV, a desktop computer, etc. The electronic device shown in Fig. 9 is only an example, and should not bring any limitation to the function and scope of use of the embodiments of the present disclosure.

As shown in Fig. 9, the electronic device 900 may include a processing apparatus (for example, a central processing unit, a graphic processor, etc.) 901, which may perform various appropriate actions and processing according to a program stored in a read-only memory (ROM) 902 or a program loaded from a storage apparatus 908 into a random access memory (RAM) 903. The RAM 903 further stores various programs and data required for the operation of the electronic device 900. The processing apparatus 901, the ROM 902, and the RAM 903 are connected to each other through a bus 904. An input/output (I/O) interface 905 is also connected to the bus 904.

Generally, the following apparatuses may be connected to the I/O interface 905: an input apparatus 906 including, for example, a touchscreen, a touchpad, a keyboard, a mouse, a camera, a microphone, an accelerometer, a gyroscope, etc.; an output apparatus 907 including, for example, a liquid crystal display (LCD), a speaker, a vibrator, etc.; a storage apparatus 908 including, for example, a magnetic tape, a hard disk, etc.; and a communication apparatus 909. The communication apparatus 909 may allow the electronic device 900 to perform wireless or wired communication with other devices to exchange data. Although Fig. 9 shows the electronic device 900 having various apparatuses, it should be understood that not all of the illustrated apparatuses are necessarily implemented or included. Alternatively, more or fewer apparatuses may be implemented or provided.

In particular, according to the embodiments of the present disclosure, the processes described above with reference to the flowcharts may be implemented as a computer software program. For example, the embodiments of the present disclosure include a computer program product, which includes a computer program carried on a non-transitory computer-readable medium, and the computer program includes program codes for executing the method shown in the flowcharts. In such an embodiment, the computer program may be downloaded and installed from a network through the communication apparatus 909, or installed from the storage apparatus 908, or installed from the ROM 902. When the computer program is executed by the processing apparatus 901, the above-mentioned functions defined in the methods of the embodiments of the present disclosure are executed.

The electronic device provided in the embodiment of the present disclosure belongs to the same inventive concept as the method provided in the above embodiment, and for the technical details not described in detail in this embodiment, reference may be made to the above-mentioned embodiments, and this embodiment and the above-mentioned embodiments have the same beneficial effects.

The embodiments of the present disclosure further provide a computer-readable medium, and the computer-readable medium stores instructions or a computer program. When the instructions or the computer program is run on a device, the device is caused to execute any implementation of the risk detection method for a language model provided by the embodiments of the present disclosure.

It should be noted that the above-mentioned computer-readable medium in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program that can be used by or in combination with an instruction execution system, apparatus or device. In the present disclosure, however, the computer-readable signal medium may include a data signal propagated in baseband or as part of a carrier wave, carrying computer-readable program codes therein. This propagated data signal may take a variety of forms, including but not limited to an electromagnetic signal, an optical signal, or any suitable combination thereof. The computer-readable signal medium may also be any computer-readable medium that is not a computer-readable storage medium, and can send, propagate or transmit a program used by or in combination with an instruction execution system, apparatus or device. The program codes contained in the computer-readable medium may be transmitted by any suitable medium, including but not limited to: a wire, an optical cable, a radio frequency (RF), etc., or any suitable combination thereof.

In some implementations, clients and servers may communicate using any currently known or future developed network protocol, such as the Hypertext transfer protocol (HTTP), and may be interconnected with any form or medium of digital data communication (e.g., a communication network). Examples of communication networks include a local area network ("LAN"), a wide area network ("WAN"), an internetwork (e.g., the Internet), and an end-to-end network (e.g., an ad hoc end-to-end network), as well as any currently known or future developed network.

The above-mentioned computer-readable medium may be included in the above-mentioned electronic device; or may exist alone without being assembled into the electronic device.

The above-mentioned computer-readable medium carries one or more programs, and when the one or more programs are executed by the electronic device, the electronic device is caused to execute the above-mentioned method.

The computer program codes for executing the operations of the present disclosure may be written in one or more programming languages or a combination thereof, and the above programming languages include but are not limited to object-oriented programming languages such as Java, Smalltalk, C++, and also include conventional procedural programming languages such as "C" programming language or similar programming languages. The program codes may be executed entirely on a user computer, partly on a user computer, as a stand-alone software package, partly on a user computer and partly on a remote computer, or entirely on a remote computer or a server. In the case of involving a remote computer, the remote computer may be connected to the user computer through any kind of network, including a local area network (LAN) or a wide area network (WAN), or may be connected to an external computer (for example, connected via the Internet using an Internet service provider).

The flowcharts and block diagrams in the drawings illustrate the architecture, functionality, and operation of possible implementations of systems, methods and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units/modules involved in the embodiments described in the present disclosure may be implemented in software or hardware. The name of the unit/module does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may contain or store a program for use by or in combination with the instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

It should be noted that the various embodiments in this specification are described in a progressive manner, and each embodiment focuses on the differences from other embodiments, and the same or similar parts between the various embodiments may be referred to each other. For the system or apparatus disclosed in the embodiments, since it corresponds to the method disclosed in the embodiments, the description is relatively simple, and reference may be made to the description of the method for related parts.

It should be understood that, in the present disclosure, "at least one" refers to one or more, and "a plurality" refers to two or more. "and/or" is used to describe an association relationship of associated objects, indicating that there may be three relationships, for example, "A and/or B" may represent: only A exists, only B exists, and both A and B exist at the same time, where A and B may be singular or plural. The character "/" generally indicates that the associated objects before and after are in an "or" relationship. "At least one of the following" or similar expressions refer to any combination of these items, including any combination of a single item or a plurality of items. For example, at least one of a, b, or c may represent: a, b, c, "a and b", "a and c", "b and c", or "a and b and c", where a, b, c may be one or more.

It should also be noted that in the present disclosure, relational terms such as first and second are only used to distinguish one entity or operation from another entity or operation, and do not necessarily require or imply any such actual relationship or order between these entities or operations. Moreover, the terms "include/comprise" or any other variants thereof are intended to cover non-exclusive inclusion, so that a process, method, article, or device including a series of elements not only includes those elements, but also includes other elements not explicitly listed, or also includes elements inherent to such process, method, article, or device. Without more limitations, elements defined by the statement "include/comprise one..." do not exclude that there are other identical elements in the process, method, article, or device including the elements.

The steps of the method or algorithm described in combination with the embodiments disclosed herein may be directly implemented by hardware, a software module executed by a processor, or a combination thereof. The software module may be placed in a random-access memory (RAM), a memory, a read-only memory (ROM), an electrically programmable ROM, an electrically erasable programmable ROM, a register, a hard disk, a removable magnetic disk, a CD-ROM, or any other form of storage medium well-known in the technical field.

The above description of the disclosed embodiments enables those skilled in the art to implement or use the present disclosure. Various modifications to these embodiments will be obvious to those skilled in the art, and the general principles defined herein may be implemented in other embodiments without departing from the spirit or scope of the present disclosure. Therefore, the present disclosure will not be limited to these embodiments shown herein, but will conform to the widest scope consistent with the principles and novel features disclosed herein.

## Claims

1. A risk detection method for a language model, comprising:
acquiring model input data of a target language model (S1);
determining at least one of intent description content and technique description content from the model input data (S2);
performing intent risk detection processing on the intent description content determined to obtain an intent risk detection result (S3), and/or performing technique risk detection processing on the technique description content determined to obtain a technique risk detection result (S4); and
determining a risk detection result of the target language model applied to the model input data based on at least one of the intent risk detection result obtained and the technique risk detection result obtained (S5).

2. The method according to claim 1, wherein the model input data comprises at least one prompt; and
the determining at least one of intent description content and technique description content from the model input data comprises:
determining at least one of intent description content and technique description content from the at least one prompt based on different source types of respective prompts in the at least one prompt.

3. The method according to claim 2, wherein the source types of respective prompts in the at least one prompt comprise a system prompt and a user prompt;
the intent description content is determined based on the system prompt and the user prompt in the model input data; and
the technique description content is determined based on the user prompt in the model input data.

4. The method according to claim 1, further comprising:
performing abnormal response detection processing on response description information to obtain an abnormal response detection result, wherein the response description information is determined based on the model input data and/or model output data of the target language model, and the model output data is obtained by the target language model by processing the model input data; and
the risk detection result of the target language model applied to the model input data is further determined based on the abnormal response detection result.

5. The method according to claim 4, wherein the model input data comprises a plurality of pieces of data, and source types of different data are different; and
the intent description content, the technique description content, and the response description information are determined based on the source types of the plurality of pieces of data.

6. The method according to claim 5, wherein the plurality of pieces of data comprise a plugin response and at least one prompt, a source type of the plugin response is different from a source type of each of the at least one prompt, and source types of different prompts are different;
the intent description content and the technique description content are determined based on the at least one prompt and the source type of the at least one prompt;
the response description information is determined based on the plugin response and/or the model output data;
the at least one prompt comprises a system prompt; and
the response description information is further determined based on the system prompt.

7. The method according to claim 1, further comprising:
acquiring model detection constraint information; and
determining, from detection execution devices corresponding to a plurality of pieces of candidate constraint information, a detection execution device matching the model detection constraint information,
wherein the detection execution device matching the model detection constraint information is configured to perform intent risk detection processing on the intent description content determined to obtain the intent risk detection result, and/or perform technique risk detection processing on the technique description content determined to obtain the technique risk detection result; and
the model detection constraint information comprises at least one selected from a group consisting of: scenario constraint information, region constraint information, service constraint information, language constraint information, and detection item constraint information.

8. The method according to claim 7, wherein the detection execution device matching the model detection constraint information comprises a detector corresponding to the intent description content and a detector corresponding to the technique description content;
the detector corresponding to the intent description content is configured to perform intent risk detection processing on the intent description content determined to obtain the intent risk detection result; and
the detector corresponding to the technique description content is configured to perform technique risk detection processing on the technique description content determined to obtain the technique risk detection result.

9. The method according to claim 8, wherein the intent description content comprises intent content of at least two source types;
the detector corresponding to the intent description content comprises detectors corresponding to intent content of various source types; and
for any source type of intent content, a detector corresponding to the source type of intent content is configured to perform intent risk detection processing on the source type of intent content.

10. The method according to claim 7, wherein after the determining, from detection execution devices corresponding to a plurality of pieces of candidate constraint information, the detection execution device matching the model detection constraint information, the method further comprises:
sending a detection request to the detection execution device matching the model detection constraint information, wherein the detection execution device matching the model detection constraint information is configured to perform intent risk detection processing on intent description content carried in the detection request to obtain the intent risk detection result, and/or perform technique risk detection processing on technique description content carried in the detection request to obtain the technique risk detection result; and
receiving feedback information from the detection execution device matching the model detection constraint information, wherein the feedback information comprises the intent risk detection result and/or the technique risk detection result.

11. The method according to any one of claims 7-10, wherein the detection execution device matching the model detection constraint information is further configured to perform abnormal response detection processing on response description information to obtain an abnormal response detection result;
the response description information is determined based on the model input data and/or model output data of the target language model; the model output data is obtained by the target language model by processing the model input data;
the detection execution devices corresponding to the plurality of pieces of candidate constraint information are constructed based on a pre-constructed detection set, and the detection set comprises one or more of at least one detection rule, at least one detection vector, and at least one detection model; and
after the determining the risk detection result of the target language model applied to the model input data, the method further comprises:
in response to the risk detection result of the target language model applied to the model input data indicating that there is a risk, updating the detection set based on the model input data.

12. A risk detection apparatus for a language model, comprising:
a data acquisition unit (801), configured to acquire model input data of a target language model;
a content determination unit (802), configured to determine at least one of intent description content and technique description content from the model input data;
a data detection unit (803), configured to perform intent risk detection processing on the intent description content determined to obtain an intent risk detection result, and/or perform technique risk detection processing on the technique description content determined to obtain a technique risk detection result; and
a result determination unit (804), configured to determine a risk detection result of the target language model applied to the model input data based on at least one of the intent risk detection result obtained and the technique risk detection result obtained.

13. An electronic device, comprising a processor and a memory,
wherein the memory is configured to store instructions or a computer program; and
the processor is configured to execute the instructions or the computer program in the memory, to enable the electronic device to perform the method according to any one of claims 1-11.

14. A computer-readable medium, storing instructions or a computer program, wherein the instructions or the computer program, when run on a device, enable the device to perform the method according to any one of claims 1-11.

15. A computer program product, comprising a computer program carried on a non-transitory computer-readable medium, wherein the computer program comprises program code for performing the method according to any one of claims 1-11.
